# EUROPÄISCHE PATENTANMELDUNG

(11) **EP 0 723 089 A2**
(43) Veröffentlichungstag der Anmeldung: **24.07.1996**
(21) Anmeldenummer: 96100620.2
(22) Anmeldetag: 17.01.1996
(51) Int. Cl.: F16D 57/04

(54) **Hydrodynamischer Retarder**

(30) Priorität: 20.01.1995 DE 19501665
(71) Anmelder: Voith Turbo GmbH, D-89522 Heidenheim (DE)
(72) Erfinder: Höller, Heinz, D-74564 Crailsheim (DE); Vogelsang, Klaus, D-74564 Crailsheim (DE); Rose, Peter, D-74532 Ilshofen (DE); Ohling, Cornelius, D-74564 Crailsheim (DE); Ott, Helmut, D-74564 Crailsheim (DE); Mondorf, Karl, D-74564 Crailsheim (DE); Beck, Manfred, D-74599 Wallhausen-Hengstfeld (DE); Heinle, Heribert, D-89423 Gundelfingen (DE); Stein, Jürgen, D-74564 Crailsheim (DE)
(74) Vertreter: Weitzel, Wolfgang, Dr.-Ing. Patentanwalt

(57) **Zusammenfassung**

Die Erfindung betrifft einen hydrodynamischer Retarder (11) mit einem Rotorschaufelrad (10);
mit einem Statorschaufelrad (1);
Rotorschaufelrad (10) und Statorschaufelrad (1) bilden miteinander wenigstens einen torusförmigen Arbeitsraum (12);
es sind Füllkanäle (7) in Schaufeln (2d) integriert.

Die Erfindung ist gekennzeichnet durch die folgenden Merkmale:
die die Füllkanäle (7) tragenden Schaufeln (2d) sind vom Schaufelgrund (3) bis hin zur Schaufelvorderkante verjüngend ausgeführt;
im Bereich der Schaufelvorderkante ist in der Rückseite (6) der Schaufel (21) eine wenigstens örtliche Verdickung (8) für den Füllkanal (2) vorgesehen.

## Beschreibung

Die Erfindung betrifft einen hydrodynamischen Retarder, im einzelnen mit den Merkmalen aus dem Oberbegriff des Anspruchs 1.

Derartige Retarder werden, insbesondere beim Einsatz in Kraftfahrzeugen oder in Anlagen mit stark wechselndem Betrieb, durch Füllen und Entleeren ein- oder ausgeschaltet. Zur Realisierung einer optimalen Arbeitsweise des Retarders sind eine Reihe von Ausführungen von Retardern mit Einrichtungen zum Füllen bekannt. Dazu gehören: 1. Retarderausführungen mit Füllnocken 2. Retarderausführungen mit Füllschlitzen

Die Füllnocken können dabei beispielsweise schaufelmittig oder auf der drucklosen Seite der Schaufel angeordnet sein. Des weiteren sind Ausführungen mit Füllöffnungen, welche als Schlitze im Rotor ausgebildet sein können, bekannt. Die Füllnocken, die zusätzlich an den Schaufeln angeordnet sind, führen dabei zu einer, bezogen auf die Länge der Füllschaufel in radialer Richtung, örtlichen Verringerung des Raumes zwischen zwei zueinander benachbarten Schaufeln, wobei einer der beiden Schaufeln ein derartiger Füllnocken zugeordnet ist. Die Füllnocken können sich dabei vom Schaufelgrund bis im wesentlichen in den Bereich der Schaufelvorderkante erstrecken. Der Nachteil derartiger Ausführungen liegt vor allem darin, daß ein störungsfreier Verlauf der Meridianströmung zwischen Rotor- und Statorschaufelrad nicht gewährleistet werden kann, aufgrund der durch die Anordnung der Füllnocken entstehenden Störstellen im Schaufelgrund. Die dabei auftretenden Stoßverluste führen zur Reduzierung der Leistungszahl λ. Bei Ausführungen mit schaufelmittig angeordneten Füllnocken wurden Reduzierungen der Leistungszahl λ um annähernd 45 % registriert. Bei Ausführungen mit Füllnocken auf der drucklosen Seite sowie mit Füllschlitzen im Rotor konnten Reduzierungen der λ-Werte um ca. 20 % ermittelt werden. Ein weiterer negativer Effekt der Störung der Meridianströmung ist die Verschlechterung der Regelbarkeit, d.h. das Vollhalten des Kreislaufes und somit Abknicken von der Grundkennlinie. Dies äußert sich vor allem in einem erhöhten Drehmomentenabfall bei höheren Drehzahlen, was durch einen erhöhten Aufwand teilweise wieder kompensiert werden kann.

Die Integration von Füllschlitzen in der Schaufel wurde dadurch ermöglicht, daß die mit Füllschlitz versehene Schaufel eine wesentlich größere Stärke aufweisen muß als andere, nicht mit Füllschlitzen versehene, Schaufeln. Die Verdickung vollzieht sich dabei über die gesamte Schaufel. Hierin ist der sich vom Schaufelgrund bis zur Schaufelvorderkante erstreckende Füllschlitz eingearbeitet. Dieser kann einen runden oder aber auch eckigen Querschnitt aufweisen. Die verdickte Ausführungen der füllschlitztragenden Schaufel führen jedoch zu einer Verringerung des möglichen Flüssigkeitsinhaltes im Schaufelraum. Dies schlägt sich wiederum in einer Reduzierung des λ-Wertes nieder. Des weiteren zeichnet sich eine derartige Ausführung durch einen erhöhten Material- und Herstellungsverfahrensaufwand, und damit höherer Kosten aus.

Der Erfindung liegt deshalb die Aufgabe zugrunde, eine Möglichkeit der Befüllung eines hydrodynamischen Retarders derart vorzusehen, daß die genannten Nachteile vermieden werden. Dies bedeutet im besonderen, daß die Befüllung über herstellungsfreundliche Schaufeln mit größtmöglichen Öffnungsquerschnitten bei geringsten Strömungswiderständen im Schaufelraum und in den Befüllöffnungen erfolgen kann.

Die erfindungsgemäße Lösung der Aufgabe ist durch das kennzeichnende Merkmal des Anspruchs 1 charakterisiert.

Vorteilhafte Ausführungsmöglichkeiten sind in den Unteransprüchen wiedergegeben. Durch die Nichtparallelität von Vorder- und Rückseite der die Füllkanäle tragenden Schaufeln ist es möglich, eine Füllöffnung derart einzubringen, daß diese für die Meridianströmung nur eine sehr geringe Störung darstellt. Da sich die Strömungsgeschwindigkeiten im Schaufelkanal beim Retarder für ein Drehzahlverhältnis von ν = 0 (fester Stator) wie ein Strömungswirbel um den Neutralpunkt verhalten, ist es besonders wesentlich, daß im Bereich der höchsten Strömungsgeschwindigkeit im Schaufelkanal keine Störungen und damit Strömungsablösungen vorhanden sind. Die keilförmige Gestaltung der Füllschaufeln ermöglicht es, daß der Strömungskanal an der Stelle mit hoher Meridiangeschwindigkeit, frei von Störungseinflüssen bleibt. Zum Wirbelzentrum hin, das sich in der Regel zwischen Rotor- und Statorschaufelrad befindet, tritt die Störung wieder auf. Die Störwirkung selbst ist jedoch wegen wesentlich kleinerer Meridiangeschwindigkeit entsprechend gering und damit technisch bzw. wirtschaftlich akzeptabel. Die Übergänge bei mittleren Geschwindigkeiten, d.h. im Bereich zwischen Wirbelzentrum und Schaufelgrund, können strömungsgünstiger gestaltet werden.

Erfindungsgemäß wird die angeströmte Schaufelseite der den Füllkanal tragenden Schaufel des Statorschaufelrades zur Schaufelvorderseite hin geneigt ausgeführt, wobei die Neigung sich vom Schaufelgrund zur Schaufelvorderkante hin vollzieht. Im Schaufelgrund weist dabei die die Füllschlitzöffnung tragende Schaufel eine Stärke auf, die es ermöglicht, die Füllschlitzöffnung vom Querschnitt her in der Schaufel zu integrieren. Vom Schaufelgrund zur Schaufelvorderkante hin verkleinert sich die Schaufeldicke. Lediglich im Bereich des sich im wesentlichen vom Schaufelgrund zur Schaufelvorderkante hin erstreckenden Füllkanales erfolgt entsprechend der Kontur bzw. der Größe des Füllkanales eine örtliche Ausbuchtung- bzw. Auswölbung an der Schaufel. Diese ist jedoch im wesentlichen im Bereich der Schaufelvorderkante angeordnet. Die örtliche Ausbuchtung geht dabei in die Schaufelrückseite über.

Die Anzahl und die Größe der Füllöffnungen sowie deren Ausführung richtet sich im wesentlichen nach der gewünschten Zeit zum Füllen des Retarderkreislaufes und dem geforderten Flüssigkeitsdurchsatz zur Abfuhr der entwickelten Bremswärme. Die Anzahl und die Größe der Füllöffnungen steht dabei in einem direkten Verhältnis zueinander.

Bei Verwendung einer Vielzahl von Füllschaufeln, beispielsweise kann jede Schaufel mit Füllöffnungen versehen sein, können diese bedingt durch den kleinen Öffnungsquerschnitt äußerst dünn ausgelegt werden. Ihre Verdickung erstreckt sich nur im Schaufelgrund und im Bereich der Füllöffnung, aber nicht über die gesamte Schaufeltiefe. Als Schaufeltiefe wird dabei die Erstreckung der Schaufel vom Schaufelgrund bis zur Vorderkante bezeichnet.

Die Füllöffnung bzw. der Füllkanal kann durch mechanische Bearbeitung oder aber als Gußlösung ausgeführt werden. Je nach Erfordernis können die Öffnung und der Querschnitt der Öffnung bzw. des Kanals variabel gestaltet werden. Die Öffnung kann beispielsweise, im Querschnitt betrachtet, kreisrund, als Ellipse oder aber im wesentlichen eckig ausgeführt werden. Der Austritt aus dem Kanal kann dabei im wesentlichen parallel zur Schaufelvorderkante angeordnet sein oder aber geneigt gegenüber der Schaufelvorderkante.

Die erfindungsgemäße Lösung der Aufgabe ist nachfolgend anhand von Figuren erläutert. Darin ist im übrigen folgendes dargestellt:
Figur 1 zeigt eine erfindungsgemäße Ausführung einer Füllschaufel anhand eines Zylinderschnittes durch ein Statorschaufelrad in abgewickelter Darstellung;
Figur 2 verdeutlicht schematisch die Strömungsgeschwindigkeiten im Statorschaufelrad;
Figuren 3a und 3b verdeutlichen schematisch den Strömungsverlauf im Schaufelgrund bei einer konventionell mit Füllnocken ausgeführten Schaufel und einer erfindungsgemäß mit geneigter Schaufelrückwand ausgeführten Schaufel;
Figuren 4a bis 4b verdeutlichen den Strömungsverlauf an den mit II und III in der Figur 2 bezeichneten Stellen.

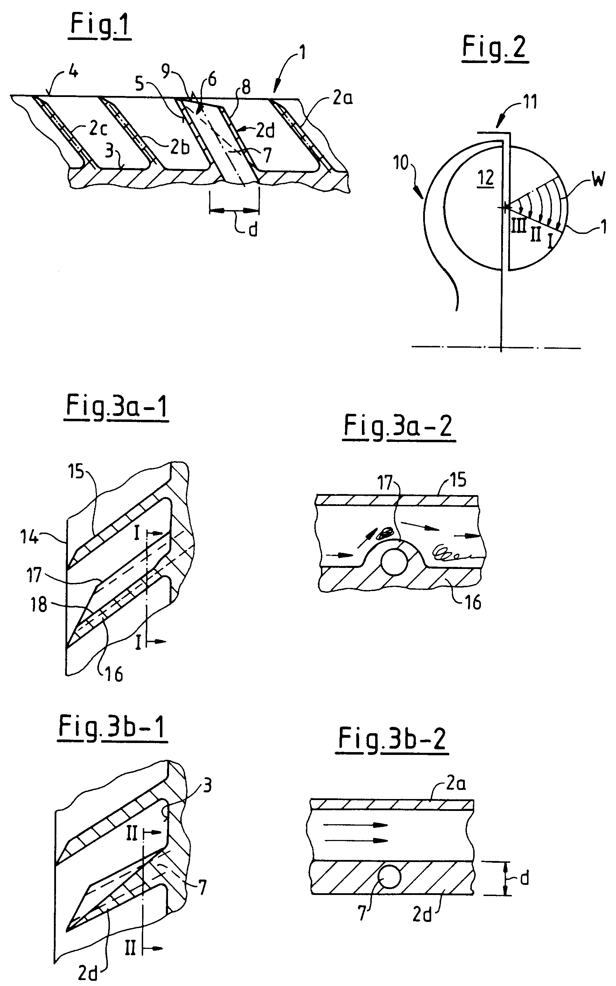

Die Figur 1 verdeutlicht einen Teilausschnitt einer Abwicklung eines Zylinderschnittes durch ein Statorschaufelrad. Ein Statorschaufelrad 1 umfaßt eine Vielzahl von Schaufeln 2, hier 2a, 2b, 2c und 2d. Diese erstrecken sich von einem Schaufelgrund 3 zum Rotorschaufelrad hinweisenden Rand 4 des Statorschaufelrades 1. Die Vorderseite 5 der Füllschaufel und die Rückseite 6 der Füllschaufel 2d verlaufen nicht parallel zueinander. In der Füllschaufel 2d ist ein Füllkanal 7 vorgesehen. Der Füllkanal 7 erstreckt sich dabei im wesentlichen über die Schaufelstärke d im Schaufelgrund. Die Rückseite 6 verläuft geneigt zur Vorderseite 5. Des weiteren ist für die Einarbeitung des Füllkanals 7 eine Ausbuchtung 8 vorgesehen, die zur Bildung des Füllkanales im Bereich außerhalb der Rückseite 6 dient.

Die Vorderseite 5 der Füllschaufel 2d kann eine andere Neigung aufweisen als die der Schaufeln 2a-2c.

Der Füllkanal 7 erstreckt sich im wesentlichen vom Schaufelgrund 3 bis hin zu dem zum Rotor weisenden Rand 4. Der Füllkanal 7 weist eine Austrittsöffnung 9 auf. Diese ist im dargestellten Ausführungsbeispiel geneigt gegenüber einer durch den Rand 4 beschreibbaren Ebene am Statorschaufelrad geneigt ausgeführt.

Die Figur 2 dient der Verdeutlichung der auftretenden Geschwindigkeitsverhältnisse im Statorschaufelrad. Der Retarder, hier mit 11 bezeichnet, umfaßt ein Rotorschaufelrad 10 und das feststehende Statorschaufelrad 1. Rotorschaufelrad und Statorschaufelrad bilden miteinander einen torusförmigen Arbeitsraum 12. Bei Befüllung mit Betriebsflüssigkeit, in der Regel Öl oder aber auch Wasser, bildet sich zwischen dem Rotor- und dem Statorschaufelrad eine Meridianströmung aus. Die Strömungsgeschwindigkeiten im Schaufelkanal verhalten sich beim Retarder wie ein Strömungswirbel um den Neutralpunkt. Als dieser kann hier der Punkt 13 angesehen werden. Als Strömungskanal wird dabei der Zwischenraum zwischen zwei zueinander benachbarten Schaufeln verstanden. In der Figur 2 wird deutlich, daß die Strömungsgeschwindigkeiten im Kanalgrund, d.h. im Schaufelgrund, am höchsten sind und zum Neutralpunkt hin abnehmen. Die Größenverhältnisse zwischen den Strömungsgeschwindigkeiten sind hier nur schematisch verdeutlicht. I bezeichnet die Strömungsgeschwindigkeit im Schaufelgrund, II den Bereich mittlerer Strömungsgeschwindigkeit und III den Bereich kleiner Strömungsgeschwindigkeit.

Die Figur 3a-I verdeutlicht schematisch einen Zylinderschnitt durch ein Statorschaufelrad in abgewickelter Darstellung bei einer konventionellen Ausführung mit Füllnocken. Das Statorschaufelrad 14 weist eine Vielzahl von Schaufeln auf, hier stellvertretend eine Schaufel 15 und eine Schaufel 16. Der Schaufel 16 ist dabei ein Füllnocken 17 zugeordnet. Dieser ist an der Schaufel 16 angebracht. Die Schaufel 16 weist somit über ihre Schaufeldicke eine örtliche Erweiterung vom Schaufelgrund bis in den Bereich der Statorschaufelradvorderkante auf.

Der Füllnocken 17 bildet dabei einen Füllkanal 18 für die Befüllung mit Betriebsflüssigkeit. Die Figur 3a-II verdeutlicht einen Schnitt I entsprechend der Figur 3a-I. Die Figur dient zur Verdeutlichung des Strömungsverlaufes im Schaufelgrund bei einer konventionellen Schaufelradausführung mit Füllnocken. In der Figur 3a-II wird verdeutlicht, daß der Füllnocken 17 in den Zwischenraum zwischen den benachbarten Schaufeln 16 und 15 hineinragt. Es wird deutlich, daß eine starke Strömungsumlenkung stattfindet, welche zu Strömungsablösungen führt.

Die Figur 3b-I verdeutlicht eine erfindungsgemäße Ausführung einer Statorschaufel mit Füllkanälen entsprechend der Figur 1. Für gleiche Elemente wurden deshalb gleiche Bezugszeichen verwendet. Die Figur 3b-II verdeutlicht einen Schnitt II entsprechend der Figur 3b-I. Die Strömungsverläufe, hier durch Pfeillinien dargestellt, werden von den Füllkanälen im Schaufelgrund 3 nicht beeinflußt. Der Füllkanal ist in diesem Bereich vollständig in die Schaufel 2d integriert. Die Schaufel 2d weist im Bereich des Schaufelgrundes eine wesentlich größere Schaufeldicke d auf als die benachbarte Schaufel 2a. Die hier dargestellten Strömungsverläufe gelten etwa für die Position I in der Figur 2. In diesem Bereich sind die Strömungsgeschwindigkeiten am höchsten, weshalb der nahezu ebene Schaufelkanal ohne Störstellen eine optimale Strömung ermöglicht.

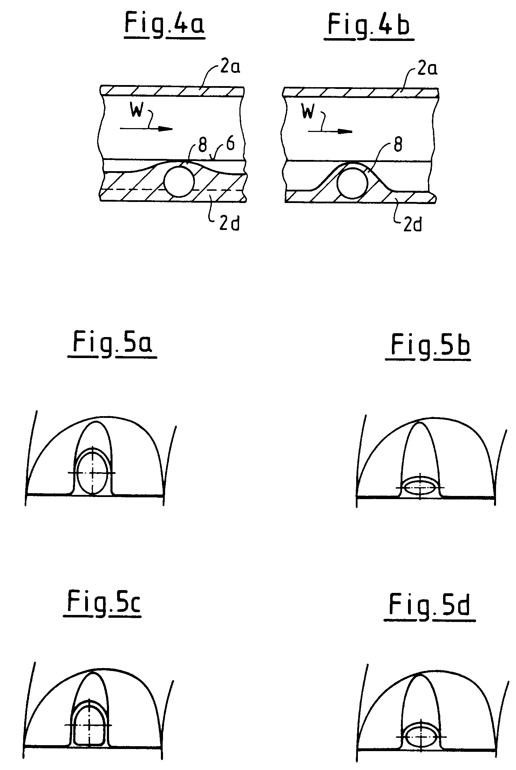

Die Figuren 4a und 4b verdeutlichen schematisch den Strömungsverlauf in den Bereichen II und III aus der Figur 2. Für gleiche Elemente wurden deshalb die gleichen Bezugszeichen verwendet. Die Figur 4a verdeutlicht den Strömungsverlauf im Bereich mittlerer Strömungsgeschwindigkeit im Schaufelraum. An der Schaufelrückseite 6, welche sich zur Schaufelvorderseite hin neigt, ist die Ausbuchtung 8 erkennbar. Diese bildet mit der Schaufelrückseite 6 eine Einheit und geht ohne sprunghafte Übergänge in diese über. Die Strömungsgeschwindigkeit, hier mit dem Pfeil W verdeutlicht, ist gegenüber der Strömungsgeschwindigkeit im Schaufelgrund geringer. Die durch die Ausbuchtung 8 hervorgerufene Unregelmäßigkeit ist in diesem Bereich noch sehr minimal, weshalb nur sehr kleine, d.h. sehr unwesentliche, Störungen des Strömungsverlaufes zu beobachten sind. Die Figur 4b verdeutlicht den Strömungsverlauf im Bereich III entsprechend der Figur 2 bzw. an der Stelle III entsprechend der Figur 3b-I. Für gleiche Elemente wurden deshalb die gleichen Vorzeichen verwendet. In dieser Ansicht wird deutlich, daß die Ausbuchtung 8 in diesem Bereich den größten Störfaktor bildet. Da jedoch im Wirbelzentrum die Meridiangeschwindigkeit W sehr gering ist, was durch einen wesentlich verkürzten Pfeil gegenüber dem in der Figur 4a zum Ausdruck kommen soll, äußert sich die Störwirkung entsprechend kaum.

In den dargestellten Figuren sind die Füllkanäle in ihrem Querschnitt kreisrund gestaltet. Es sind jedoch auch andere Querschnittsformen denkbar, wie beispielsweise in den Figuren 5a bis 5d dargestellt. Diese Figuren verdeutlichen jeweils eine Ansicht auf die Beschaufelung eines Statorschaufelrades. In den Ausführungen entsprechend den Figuren 5a und 5c sind die Austrittsöffnungen gegenüber einer Ebene, welche durch die Vorderkanten der Schaufeln des Statorschaufelrades gebildet werden kann, geneigt ausgeführt. In den Figuren 5b und 5d liegen diese in etwa in der von den Vorderkanten der Schaufeln des Statorschaufelrades aufgespannten Ebene bzw. nahezu parallel dazu.

Die erfindungsgemäße Ausführung der Füllschaufeln kann sowohl im Statorschaufelrad als auch im Rotorschaufelrad zur Anwendung kommen.

## Patentansprüche

1. Hydrodynamischer Retarder
1.1 mit einem Rotorschaufelrad (10);
1.2 mit einem Statorschaufelrad (1);
1.3 Rotorschaufelrad und Statorschaufelrad bilden miteinander wenigstens einen torusförmigen Arbeitsraum (12);
1.4 es sind Füllkanäle in Schaufeln integriert; gekennzeichnet durch die folgenden Merkmale:
1.5 die die Füllkanäle tragenden Schaufeln sind vom Schaufelgrund bis hin zur Schaufelvorderkante verjüngend ausgeführt;
1.6 im Bereich der Schaufelvorderkante ist in der Rückseite der Schaufel eine örtliche Verdickung für den Füllkanal vorgesehen.

2. Hydrodynamischer Retarder nach Anspruch 1, dadurch gekennzeichnet, daß die Füllkanäle am Statorschaufelrad vorgesehen sind.

3. Hydrodynamischer Retarder nach Anspruch 1, dadurch gekennzeichnet, daß die Füllkanäle am Rotorschaufelrad vorgesehen sind.

4. Hydrodynamischer Retarder nach einem der Ansprüche 1 bis 3, dadurch gekennzeichnet, daß die Anzahl der Füllkanäle und deren Größe in einem bestimmten Verhältnis zueinander stehen.

5. Hydrodynamischer Retarder nach einem der Ansprüche 1 bis 4, dadurch gekennzeichnet, daß der Querschnitt des Füllkanales kreisrund ist.

6. Hydrodynamischer Retarder nach einem der Ansprüche 1 bis 4, dadurch gekennzeichnet, daß der Querschnitt des Füllkanales oval ist.

7. Hydrodynamischer Retarder nach einem der Ansprüche 1 bis 6, dadurch gekennzeichnet, daß die Austrittsöffnung des Füllkanales geneigt gegenüber einer Ebene, welche von den Schaufelvorderkanten aufgespannt wird, angeordnet ist.

8. Hydrodynamischer Retarder nach einem der Ansprüche 1 bis 7, dadurch gekennzeichnet, daß das Statorschaufelrad als Gußteil ausgeführt ist.

9. Hydrodynamischer Retarder nach einem der Ansprüche 1 bis 7, dadurch gekennzeichnet, daß das Statorschaufelrad als Schweiß- bzw. Lötkonstruktion ausgeführt ist.
